# EUROPEAN PATENT SPECIFICATION

(11) **EP 2 843 994 B1**
(45) Date of publication and mention of the grant of the patent: **10.10.2018**
(21) Application number: 13780752.5
(22) Date of filing: 15.04.2013
(51) Int. Cl.: H04W 36/08, H04W 48/16, H04W 48/20, H04W 88/08, H04W 36/00, H04W 48/18

(54) **EPLMN LIST CONFIGURING METHOD, HANDOVER TARGET PLMN SELECTING METHOD, MME AND ENB**
EPLMN-LISTENKONFIGURATIONSVERFAHREN, AUSWAHLVERFAHREN FÜR ZIEL-PLMN EINER ÜBERGABE, MME UND ENB
PROCÉDÉ POUR LA CONFIGURATION D'UNE LISTE DE RÉSEAUX EPLMN, PROCÉDÉ POUR LA SÉLECTION D'UN PLMN CIBLE EN VUE D'UN TRANSFERT INTERCELLULAIRE, MME ET ENB

(30) Priority: 24.04.2012 CN 201210123492
(43) Date of publication of application: 04.03.2015
(73) Proprietor: ZTE Corporation, Shenzhen, Guangdong 518057 (CN)
(72) Inventor: SUN, Wei, Shenzhen Guangdong 518057 (CN); ZHANG, Rong, Shenzhen Guangdong 518057 (CN)
(74) Representative: Garratt, Peter Douglas
(86) International application number: PCT/CN2013/074195
(87) International publication number: WO 2013/159657

(56) References cited:
- EP-A1- 2 403 284
- EP-A1- 2 427 029
- WO-A1-2010/145471
- CN-A- 101 483 853
- CN-A- 101 815 284
- CN-A- 102 256 233
- US-A1- 2011 096 721
- US-A1- 2011 153 844

## Description

### Technical Field

The present invention relates to mobile communication systems, and in particular, to a method for configuring an Equivalent Public Land Mobile Network (EPLMN) list and an (MME), as well as a method for selecting a handover target Public Land Mobile Network (PLMN) and an Evolved Node B (eNodeB).

### Background of the Related Art

In a network sharing environment, the eNodeB (eNB) and Mobility Management Entity (MME) may support multiple Public Land Mobile Networks (PLMNs). When a handover of a User Equipment (UE) occurs, if a serving PLMN registered by the UE when accessing a network in a source cell is not supported in a handover target cell, the source eNodeB needs to select another PLMN for the UE as a handover target PLMN. The target PLMN will become a serving PLMN after the UE is handed over to the target side.

The source eNodeB may select the handover target PLMN for the UE according to information about the EPLMN list included in a Handover Restriction List issued by the MME. The materials disclosed currently do not relate to a method for configuring an EPLMN list and a method for selecting a handover target PLMN for a UE in the EPLMN list.

The document, US2011153844A1, has disclosed the related art of the present invention.

### Summary of the Invention

The purpose of the present invention is to provide a method for configuring an EPLMN list and an MME, as well as a method for selecting a handover target PLMN and an eNB, to implement configuration of the EPLMN list and selection of the handover target PLMN.

In order to achieve the above purpose, the embodiments of the present invention provide a method for configuring an Equivalent Public Land Mobile Network (EPLMN) list, comprising:
upon being triggered, a Mobility Management Entity (MME) grouping a Tracking Area Code (TAC) of a cell currently accessed by a user equipment and an adjacent TAC of the TAC of the cell currently accessed by the user equipment to form a TAC set;
acquiring each Evolved Node B (eNB) which supports at least one TAC in the TAC set, selecting primary Public Land Mobile Networks (PLMNs) under the TACs in the TAC set which are supported by the eNB, and grouping various TACs and their corresponding primary PLMNs to form a second set, wherein, the second set has no identical elements, and does not comprise a serving PLMN of a current serving cell of the user equipment; and
adding PLMNs in the second set which are different from each other to an Equivalent Public Land Mobile Network (EPLMN) list and issuing the EPLMN list to the eNB of the user equipment.

The above method may further have the following features: the step of the MME being triggered comprises the user equipment initiating an access, or the user equipment performing tracking area update, or a source cell of the user equipment initiating a handover request S1 for the user equipment.

The above method may further have the following features: the method further comprising: the MME acquiring the TAC of the cell currently accessed by the user equipment from an S1 message.

The above method may further have the following features: the method further comprising: after an S1 connection is established successfully, the MME storing a tracking area supported by each eNB, and maintaining an adjacency relationship between various tracking areas according to S 1 connection information.

The embodiments of the present invention further provide a method for selecting a handover target Public Land Mobile Network (PLMN), comprising:
after an Evolved Node B (eNB) of a user equipment receiving an Equivalent Public Land Mobile Network (EPLMN) list issued by an Mobility Management Entity (MME) using any of the above methods, using a PLMN obtained from an intersection between a PLMN list supported by a candidate handover target cell of the user equipment and the EPLMN list as the handover target PLMN.

The embodiments of the present invention further provide a Mobility Management Entity (MME), comprising a list generation unit and a list issue unit, wherein:
the list generation unit is configured to: upon being triggered, group a Tracking Area Code (TAC) of a cell currently accessed by a user equipment and an adjacent TAC of the TAC of the cell currently accessed by the user equipment to form a TAC set; acquire each Evolved Node B (eNB) which supports at least one TAC in the TAC set, select primary Public Land Mobile Networks (PLMNs) under the TACs in the TAC set which are supported by the eNB, and group various TACs and their corresponding primary PLMNs to form a second set, wherein, the second set has no identical elements, and does not comprise a serving PLMN of a current serving cell of the user equipment; and add PLMNs in the second set which are different from each other to an Equivalent Public Land Mobile Network (EPLMN) list; and
the list issue unit is configured to issue the EPLMN list to the eNB of the user equipment.

The above MME may further have the following features: the list generation unit is triggered by the following way: the user equipment initiating an access, or the user equipment performing tracking area update, or a source cell of the user equipment initiating a S1 handover request for the user equipment.

The above MME may further have the following features: the list generation unit is further configured to acquire the TAC of the cell currently accessed by the user equipment from the S1 message.

The above MME may further have the following features: the MME further comprising:
an information maintenance unit, configured to: after the S1 connection is established successfully, store a tracking area supported by each eNB, and maintain an adjacency relationship between various tracking areas according to S 1 connection information.

The embodiments of the present invention further provide an Evolved Node B (eNB), comprising a list reception unit and a handover target selection unit, wherein,
the list reception unit is configured to receive an Equivalent Public Land Mobile Network (EPLMN) list issued by an Mobility Management Entity (MME) using any of the above methods; and
the handover target selection unit is configured to use a Public Land Mobile Network (PLMN) obtained from an intersection between a Public Land Mobile Network (PLMN) list supported by a candidate handover target cell of the user equipment and the EPLMN list as the handover target PLMN.

The technical schemes of the present invention can ensure that the MME can configure a suitable EPLMN list to assist a source eNodeB to select a suitable handover target PLMN for the UE.

### Brief Description of Drawings

Fig. 1 is a diagram of a handover scenario when a PLMN of a UE changes;
Fig. 2 is a flowchart of a method for configuring an EPLMN list and a method for selecting a handover target PLMN;
Fig. 3 is a flowchart of a method for selecting a PLMN in an EPLMN list;
Fig. 4 is a diagram of configuring an EPLMN of application scenario one;
Fig. 5 is a flowchart of configuring an EPLMN list according to embodiment one;
Fig. 6 is a diagram of configuring an EPLMN of application scenario two;
Fig. 7 is a flowchart of configuring an EPLMN list according to embodiment two;
Fig. 8 is a block diagram of an MME according to an embodiment of the present invention;
Fig. 9 is a block diagram of an eNB according to an embodiment of the present invention.

### Preferred Embodiments of the Present Invention

In order to make the purpose, technical schemes and advantages of the present invention more clear and apparent, the embodiments of the present invention will be further illustrated in detail hereinafter with respect to accompanying drawings. It should be illustrated that, in the case of no conflict, the embodiments of this application and the features in the embodiments could be combined randomly with each other.

The 3GPP protocol requires that the configuration of the EPLMN needs to meet a principle: for any adjacent cell to which the UE is to be handed over, only one PLMN corresponding to the cell can be selected from the EPLMN list information. The method described by the embodiments of the invention can meet the principle of the protocol, and can effectively and correctly aid a source eNodeB to select an appropriate handover target PLMN for the UE. The method is discussed under the following two premises specified in the protocol.
1) All cells under the eNB should support a Primary PLMN, and put the Primary PLMN at a first position in the PLMN list broadcast by the cell to issue.
2) In a Tracking Area (TA), the PLMNs broadcast by all cells are the same.

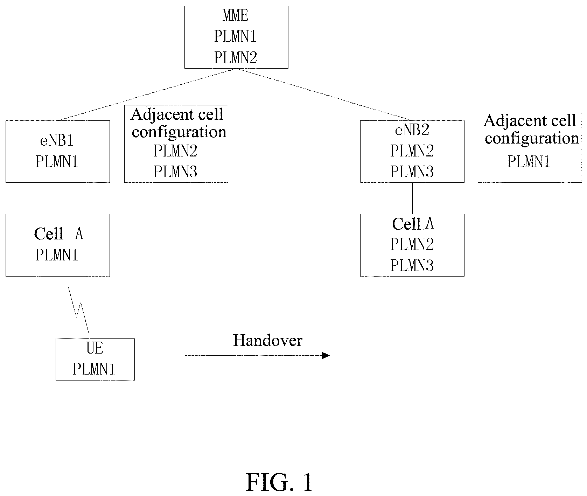

When the UE is to be handed over, if the PLMN accessed by the UE in the source cell is not supported in a target cell, the UE will be handed over to a changed PLMN. At this time, the source cell needs to select a handover target PLMN for the UE according to EPLMN list information issued by the MME, as shown in Fig. 1 .

The embodiments of the present invention provide a method for configuring an EPLMN list, comprising:
upon being triggered, an MME grouping a TAC of a cell currently accessed by a user equipment and an adjacent TAC of the TAC to form a TAC set;
acquiring each eNB which supports at least one TAC in the TAC set, selecting primary PLMNs under the TACs in the TAC set which are supported by the eNB, and grouping various TACs and their corresponding primary PLMNs to form a second set, the second set having no identical elements, and not comprising a serving PLMN of a current serving cell of the user equipment; and
adding PLMNs in the second set which are different from each other to an EPLMN list and issuing the EPLMN list to the eNB of the user equipment.

Wherein, the step of the MME being triggered comprises the user equipment initiating an access, or the user equipment performing tracking area update, or a source cell of the user equipment initiating a handover request S1 for the user equipment.

Wherein, the method further comprises: the MME acquiring the TAC of the cell currently accessed by the user equipment from an S1 message.

Wherein, the method further comprises: after an S1 connection is established successfully, the MME storing a tracking area supported by each eNB, and maintaining an adjacency relationship between various tracking areas according to S1 connection information.

The embodiments of the present invention provide a method for selecting a handover target PLMN, comprising:
after an eNB of a user equipment receiving an EPLMN list issued by an MME, using a PLMN obtained in an intersection between a PLMN list supported by a candidate handover target cell of the user equipment and the EPLMN list as the handover target PLMN.

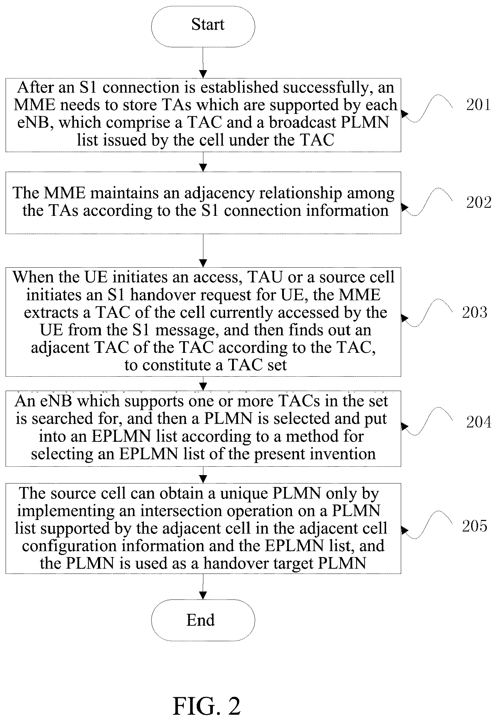

As shown in Fig.2, a method for configuring an EPLMN list and a method for selecting a handover target PLMN provided by the embodiment of the invention comprise the steps as follows. In step 201, after an S1 connection is established successfully, an MME stores TAs (Support TAs) which are supported by each eNB, which comprise a Tracking Area Code (TAC) and a broadcast PLMN list issued by the cell under the TAC.

In step 202, the MME maintains an adjacency relationship among the TAs according to the S1 connection information.

In step 203, upon being triggered, the MME extracts a TAC of the cell currently accessed by the UE from the S1 message, and then finds out an adjacent TAC of the TAC according to the TAC, to constitute a TAC set.

Wherein, the step of the MME being triggered comprises one of the following or a combination thereof: the UE initiating an access, the UE performing Tracking Area Update (TAU) or a source cell initiating an S1 handover request for UE.

In step 204, an eNB which supports at least one TAC in the set is searched for, and then a PLMN is selected and put into an EPLMN list according to a method for selecting an EPLMN list as described below.

In step 205, the source cell can obtain a unique PLMN only by implementing an intersection operation on a PLMN list supported by the adjacent cell in the adjacent cell configuration information and the EPLMN list, and the PLMN is used as a handover target PLMN.

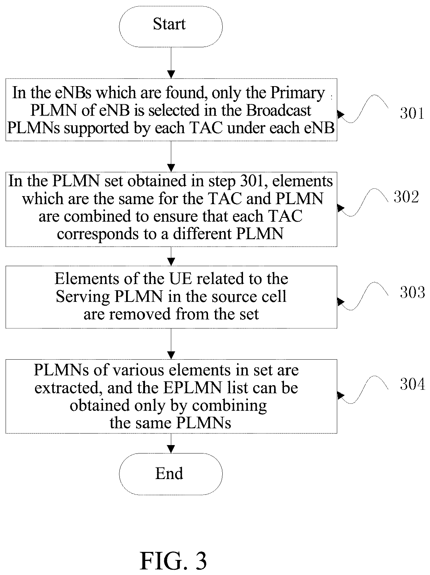

A flow of a method for selecting a PLMN in an EPLMN list is shown in Fig. 3, which comprises the following steps.

In step 301, in the eNBs which are found, only the Primary PLMN (i.e., first of the Broadcast PLMNs) of eNB is selected in the Broadcast PLMNs supported by each TAC included in the TAC set as described in step 203 under each eNB.

In step 302, in the PLMN set obtained in step 301, elements which are the same for the TAC and PLMN are combined to ensure that each TAC corresponds to a different PLMN.

In step 303, elements of the UE related to the Serving PLMN in the source cell are removed from the set.

In step 304, PLMNs of various elements in set are extracted, and the EPLMN list can be obtained only by combining the same PLMNs.

### Embodiment 1

The selection and configuration of the EPLMN list will be described below in conjunction with accompanying drawings 4 and 5.

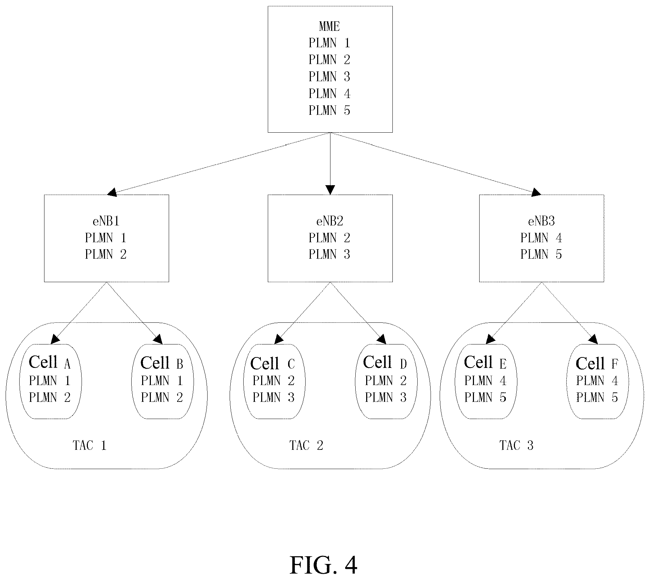

An application scenario of embodiment 1 is as shown in Fig. 4. Cells under each eNodeB are in one TA:
- Serving PLMNs supported by the MME: PLMN1, PLMN2, PLMN3, PLMN4 and PLMN5.
- eNB1 supports PLMN: PLMN1 and PLMN2, and the Primary PLMN: PLMN1.
- eNB2 supports PLMN: PLMN2 and PLMN3, and the Primary PLMN: PLMN2.
- eNB3 supports PLMN: PLMN4 and PLMN5, and the Primary PLMN: PLMN4.
- Cell A issues a broadcast PLMN List: PLMN1 and PLMN2.
- Cell B issues a broadcast PLMN List: PLMN1 and PLMN2.
- Cell C issues a broadcast PLMN List: PLMN2 and PLMN3.
- Cell D issues a broadcast PLMN List: PLMN2 and PLMN3.
- Cell E issues a broadcast PLMN List: PLMN4 and PLMN5.
- Cell F issues a broadcast PLMN List: PLMN4 and PLMN5.
- Cells A and B belong to TAC1, cells C and D belong to TAC2, and cells E and F belong to TAC3.
- Cells B, C, D, E and F are all adjacent cells of cell A.
- The UE accesses cell A with PLMN1.

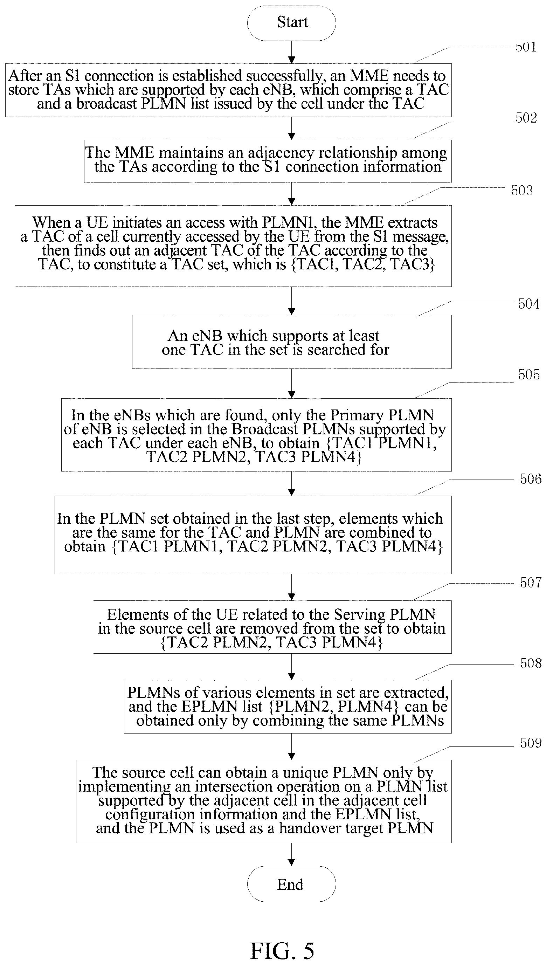

As shown in Fig.5, the selection and configuration of the EPLMN list comprise the following steps.

In step 501, after the S1 connection is established successfully, the MME needs to store the Support TAs of each eNB, which comprise a TAC and a broadcast PLMN list issued by the cell in the TAC.

In step 502, the MME maintains an adjacency relationship among the TAs according to the S1 connection information.

In step 503, when a UE initiates an access or performs TAU or a source cell initiates an S1 handover request for UE, the MME extracts a TAC of a cell currently accessed by the UE from the S1 message, then finds out an adjacent TAC of the TAC according to the TAC, to constitute a TAC set. In the embodiment, the TAC set is {TAC1, TAC2, TAC3}.

Specifically, when the UE initiates an access or performs TAU, the S1 message is S1AP_InitialUeMsg, and when the source cell initiates an S1 handover request for UE, the S1 message is S1AP_HandoverRequiredMsg.

In step 504, an eNB which supports one or more TACs in the TAC set is searched for.

In step 505, in the eNBs which are found, only the Primary PLMN (i.e., first of the Broadcast PLMNs) of eNB is selected in the Broadcast PLMNs supported by each TAC included in the TAC set under each eNB. Then a set may be obtained: {TAC1 PLMN1, TAC2 PLMN2, TAC3 PLMN4}.

| | |
|---|---|
| TAC1 PLMN1, | -- extracted from Support TAs of eNB1. |
| TAC2 PLMN2, | -- extracted from Support TAs of eNB2. |
| TAC3 PLMN4, | -- extracted from Support TAs of eNB3. |

In step 506, in the PLMN set obtained in step 505, elements which are the same for the TAC and PLMN are combined to ensure that each TAC corresponds to a different PLMN. A set may be obtained: {TAC1 PLMN1, TAC2 PLMN2, TAC3 PLMN4}.

In step 507, elements of the UE related to the Serving PLMN in the source cell are removed from the set. A set can be obtained: {TAC2 PLMN2, TAC3 PLMN4}.

That is, a serving PLMN of the source cell of the user equipment and a corresponding TAC are removed.

In step 508, PLMNs of various elements in set are extracted, and the EPLMN list {PLMN2, PLMN4} can be obtained only by combining the same PLMNs. This set is the EPLMN List which is selected.

In step 509, the source cell can obtain a unique PLMN only by implementing an intersection operation on a PLMN list supported by the adjacent cell in the adjacent cell configuration information and the EPLMN list, and the PLMN is used as a handover target PLMN. The correctness of EPLMN can be verified. It can be verified that when the UE is handed over from the cell A to any other adjacent cell, if the Serving PLMN of the UE at the source side is not supported in the adjacent cell, the source cell can select only one PLMN as a handover target PLMN by implementing an intersection operation on a PLMN List supported by any one adjacent cell and EPLMN List.

For example, the UE accesses PLMN1 in the source cell A, and if the UE is handed over to a cell B, it will continue to maintain in PLMN1 since the cell B supports PLMN1;

If the UE is handed over to cells C and D, and the intersection between {PLMN2, PLMN3} and {PLMN2, PLMN4} is PLMN2, the handover target PLMN is PLMN2;

If the UE is handed over to cells E and F, and the intersection between {PLMN4, PLMN5} and {PLMN2, PLMN4} is PLMN4, the handover target PLMN is PLMN4.

### Embodiment 2

Flows of the selection method and configuration steps of the EPLMN list will be described below in conjunction with accompanying drawings 6 and 7.

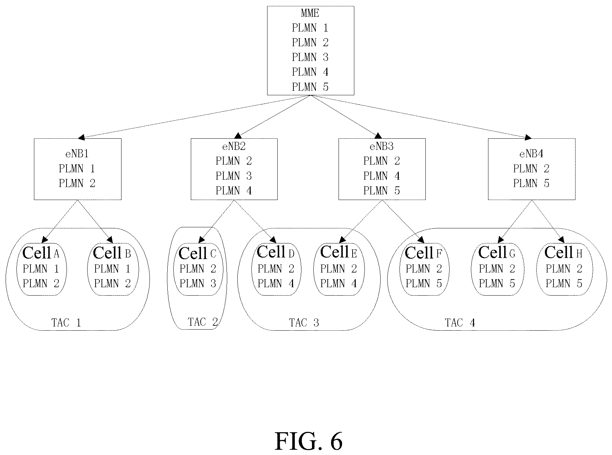

An application scenario of embodiment 2 is as shown in Fig. 6. Cells under each eNodeB are in different TAs:
- Serving PLMNs supported by the MME: PLMN1, PLMN2, PLMN3, PLMN4 and PLMN5.
- eNB1 supports PLMN: PLMN1 and PLMN2, and the Primary PLMN: PLMN1.
- eNB2 supports PLMN: PLMN2, PLMN3 and PLMN4, and the Primary PLMN: PLMN2.
- eNB3 supports PLMN: PLMN2, PLMN4 and PLMN5, and the Primary PLMN: PLMN2.
- eNB4 supports PLMN: PLMN2 and PLMN5, and the Primary PLMN: PLMN2.
- Cell A issues a broadcast PLMN List: PLMN1 and PLMN2.
- Cell B issues a broadcast PLMN List: PLMN1 and PLMN2.
- Cell C issues a broadcast PLMN List: PLMN2 and PLMN3.
- Cell D issues a broadcast PLMN List: PLMN2 and PLMN4.
- Cell E issues a broadcast PLMN List: PLMN2 and PLMN4.
- Cell F issues a broadcast PLMN List: PLMN2 and PLMN5.
- Cell G issues a broadcast PLMN List: PLMN2 and PLMN5.
- Cell H issues a broadcast PLMN List: PLMN2 and PLMN5.
- Cells A and B belong to TAC1, cell C belongs to TAC2, cells D and E belong to TAC3, and cells F, G and H belong to TAC4.
- Cells B, C, D, E, F, G and H are all adjacent cells of cell A.
- The UE accesses cell A with PLMN1.

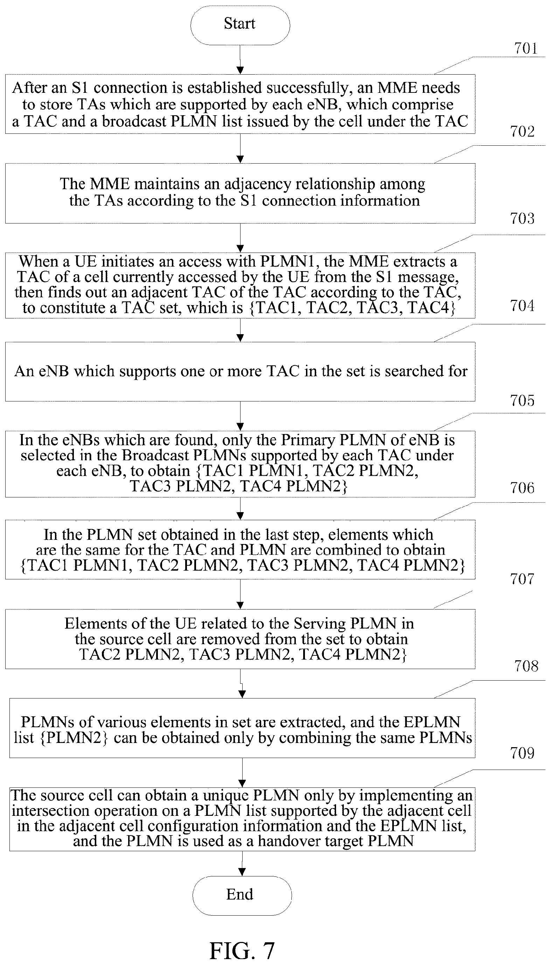

A flowchart of configuration of an EPLMN list of embodiment two is shown in Fig. 7, and comprises the following steps.

In step 701, after the S1 connection is established successfully, the MME needs to store the Support TAs of each eNB, which comprise a TAC and a broadcast PLMN list issued by the cell in the TAC.

In step 702, the MME maintains an adjacency relationship among the TAs according to the S1 connection information.

In step 703, when a UE initiates an access or performs TAU or a source cell initiates an S1 handover request for UE, the MME extracts a TAC of a cell currently accessed by the UE from the S1 message, then finds out an adjacent TAC of the TAC according to the TAC, to constitute a TAC set, which is {TAC1, TAC2, TAC3, TAC4}.

In step 704, an eNB which supports one or more TACs in the TAC set is searched for.

In step 705, in the eNBs which are found, only the Primary PLMN (i.e., first of the Broadcast PLMNs) of eNB is selected in the Broadcast PLMNs supported by each TAC under each eNB. Then a set may be obtained: {TAC1 PLMN1, TAC2 PLMN2, TAC3 PLMN2, TAC4 PLMN2 }.

| | |
|---|---|
| TAC1 PLMN1, | -- extracted from Support TAs of eNB1. |
| TAC2 PLMN2, | -- extracted from Support TAs of eNB2. |
| TAC3 PLMN2, | -- extracted from Support TAs of eNB3. |
| TAC4 PLMN2, | -- extracted from Support TAs of eNB4. |

In step 706, in the PLMN set obtained in the last step, elements which are the same for the TAC and PLMN are combined to ensure that each TAC corresponds to a different PLMN. A set may be obtained: {TAC1 PLMN1, TAC2 PLMN2, TAC3 PLMN2, TAC4 PLMN2}.

In step 707, elements of the UE related to the Serving PLMN in the source cell are removed from the set. A set can be obtained: {TAC2 PLMN2, TAC3 PLMN2, TAC4 PLMN2}.

In step 708, PLMNs of various elements in set are extracted, and the set {PLMN2} can be obtained only by combining the same PLMNs. This set is the EPLMN List which is selected.

In step 709, the source cell can obtain a unique PLMN only by implementing an intersection operation on a PLMN list supported by the adjacent cell in the adjacent cell configuration information and the EPLMN list, and the PLMN is used as a handover target PLMN. The correctness of EPLMN can be verified. It can be verified that when the UE is handed over from the cell A to any other adjacent cell, if the Serving PLMN of the UE at the source side is not supported in the adjacent cell, the source cell can select only one PLMN as a handover target PLMN by implementing an intersection operation on a PLMN List supported by any one adjacent cell and EPLMN List.

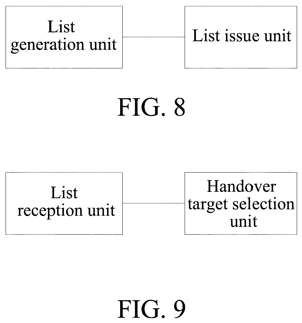

The embodiments of the present invention further provide an MME. As shown in Fig. 8, the MME comprises a list generation unit and a list issue unit, wherein:
the list generation unit is configured to: upon being triggered, group a TAC of a cell currently accessed by a user equipment and an adjacent TAC of the TAC to form a TAC set; acquire each eNB which supports at least one TAC in the TAC set, select primary PLMNs under the TACs in the TAC set which are supported by the eNB, and group various TACs and their corresponding primary PLMNs to form a second set, wherein, the second set has no identical elements, and does not comprise a serving PLMN of a current serving cell of the user equipment; and add PLMNs in the second set which are different from each other to an EPLMN list; and
the list issue unit is configured to issue the EPLMN list to the eNB of the user equipment.

Wherein, the list generation unit is triggered by the following mode: the user equipment initiating an access, or the user equipment performing tracking area update, or a source cell of the user equipment initiating a handover request S 1 for the user equipment.

Wherein, the list generation unit is further configured to acquire the TAC of the cell currently accessed by the user equipment from the S1 message.

Wherein, the MME further comprises:
an information maintenance unit, configured to: after the S1 connection is established successfully, store a tracking area supported by each eNB, and maintain an adjacency relationship between various tracking areas according to S 1 connection information.

The embodiments of the present invention further provide an eNB. As shown in Fig. 9, the eNB comprises a list reception unit and a handover target selection unit, wherein,
the list reception unit is configured to receive an EPLMN list issued by an MME using the above method; and
the handover target selection unit is configured to use a PLMN obtained in an intersection between a PLMN list supported by a candidate handover target cell of the user equipment and the EPLMN list as the handover target PLMN.

A person having ordinary skill in the art can understand that all or a part of steps in the above method can be implemented by programs instructing related hardware, and the programs can be stored in a computer readable storage medium, such as a read-only memory, disk or disc etc. Alternatively, all or a part of steps in the above embodiments can also be implemented by one or more integrated circuits. Accordingly, each module/unit in the above embodiments can be implemented in a form of hardware, or can also be implemented in a form of software functional module. The embodiments of the present invention are not limited to any particular form of a combination of hardware and software.

### Industrial Applicability

The technical schemes of the present invention can ensure that the MME can configure a suitable EPLMN list to assist a source eNodeB to select a suitable handover target PLMN for the UE.

## Claims

1. A method performed by a Mobility Management Entity (MME) for configuring an Equivalent Public Land Mobile Network (EPLMN) list,
**characterized by** comprising:
upon being triggered, grouping (203) a Tracking Area Code (TAC) of a cell currently accessed by a user equipment and an adjacent TAC of the TAC of the cell currently accessed by the user equipment to form a TAC set;
finding (204) each Evolved Node B (eNB) which supports at least one TAC in the TAC set, selecting (301) primary Public Land Mobile Networks (PLMNs) under the TACs in the TAC set which are supported by the eNB, and grouping various TACs and their corresponding primary PLMNs to form a second set, wherein, the second set has (302) no identical elements, and does not comprise (303) a serving PLMN of a current serving cell of the user equipment; and
adding (204) PLMNs in the second set which are (304) different from each other to an Equivalent Public Land Mobile Network (EPLMN) list and issuing the EPLMN list to the eNB of the user equipment.

2. The method according to claim 1, wherein, the step of the MME being triggered comprises the user equipment initiating an access, or the user equipment performing tracking area update, or a source cell of the user equipment initiating a handover request S1 for the user equipment.

3. The method according to claim 1 or 2, further comprising: the MME acquiring the TAC of the cell currently accessed by the user equipment from an S1 message.

4. The method according to claim 1 or 2, further comprising: after a S1 connection is established successfully, the MME storing a tracking area supported by each eNB, and maintaining an adjacency relationship between various tracking areas according to S1 connection information.

5. A method for selecting a handover target Public Land Mobile Network (PLMN), comprising:
after an Evolved Node B (eNB) of a user equipment receiving an Equivalent Public Land Mobile Network (EPLMN) list issued by an Mobility Management Entity (MME) using the method according to any of claims 1-4, using a PLMN obtained from an intersection between a PLMN list supported by a candidate handover target cell of the user equipment and the EPLMN list as the handover target PLMN.

6. A Mobility Management Entity (MME), comprising a list generation unit and a list issue unit, **characterized in that**:
the list generation unit is configured to: upon being triggered, group a Tracking Area Code (TAC) of a cell currently accessed by a user equipment and an adjacent TAC of the TAC of the cell currently accessed by the user equipment to form a TAC set; find each Evolved Node B (eNB) which supports at least one TAC in the TAC set, select primary Public Land Mobile Networks (PLMNs) under the TACs in the TAC set which are supported by the eNB, and group various TACs and their corresponding primary PLMNs to form a second set, wherein, the second set has no identical elements, and does not comprise a serving PLMN of a current serving cell of the user equipment; and add PLMNs in the second set which are different from each other to an Equivalent Public Land Mobile Network (EPLMN) list; and
the list issue unit is configured to issue the EPLMN list to the eNB of the user equipment.

7. The MME according to claim 6, wherein, the list generation unit is triggered by the following way: the user equipment initiating an access, or the user equipment performing tracking area update, or a source cell of the user equipment initiating a S1 handover request for the user equipment.

8. The MME according to claim 6 or 7, wherein, the list generation unit is further configured to acquire the TAC of the cell currently accessed by the user equipment from the S1 message.

9. The MME according to claim 6 or 7, wherein, the MME further comprises:
an information maintenance unit, configured to: after the S1 connection is established successfully, store a tracking area supported by each eNB, and maintain an adjacency relationship between various tracking areas according to S1 connection information.

10. An Evolved Node B (eNB), comprising a list reception unit and a handover target selection unit, **characterized in that**:
the list reception unit is configured to receive an Equivalent Public Land Mobile Network (EPLMN) list issued by an Mobility Management Entity (MME) using the method according to any of claims 1-4; and
the handover target selection unit is configured to use a Public Land Mobile Network (PLMN) obtained from an intersection between a Public Land Mobile Network (PLMN) list supported by a candidate handover target cell of the user equipment and the EPLMN list as the handover target PLMN.

## Patentansprüche

1. Verfahren, das von einer Mobilitätsmanagement-Netzwerkkomponente (Mobility Management Entity - MME) zum Konfigurieren einer Liste äquivalenter öffentlicher terrestrischer Mobilfunknetze (Equivalent Public Land Mobile Network - EPLMN) durchgeführt wird, **dadurch gekennzeichnet, dass** es umfasst:
bei Auslösung Gruppieren (203) eines Tracking-Bereichscodes (Tracking Area Code - TAC) einer Zelle, zu der eine Teilnehmereinrichtung aktuell Zugang hat, und eines adjazenten TAC des TAC der Zelle, zu der die Teilnehmereinrichtung aktuell Zugang hat, zu einer TAC-Menge;
Finden (204) jedes entwickelten Knotens B (Evolved Node B - eNB), der wenigstens einen TAC in der TAC-Menge unterstützt, Auswählen (301) von primären öffentlichen terrestrischen Mobilfunknetzen (Primary Public Land Mobile Networks - PLMN) unter den TAC in der TAC-Menge, die vom eNB unterstützt werden, und Gruppieren verschiedener TAC und ihrer entsprechenden primären PLMN zu einer zweiten Menge, wobei die zweite Menge keine identischen Elemente hat (302) und kein Versorgungs-PLMN einer aktuellen Versorgungszelle der Teilnehmereinrichtung umfasst (303); und
Hinzufügen (204) von PLMN in der zweiten Menge, die voneinander verschieden sind (304), zu einer Liste äquivalenter öffentlicher terrestrischer Mobilfunknetze (Equivalent Public Land Mobile Network - EPLMN) und Ausgeben der EPLMN-Liste an den eNB der Teilnehmereinrichtung.

2. Verfahren nach Anspruch 1, wobei der Schritt des Auslösens der MME das Initiieren eines Zugangs durch die Teilnehmereinrichtung oder des Durchführens einer Tracking-Bereichsaktualisierung durch die Teilnehmereinrichtung oder das Initiieren einer Übergabeanforderung S1 für die Teilnehmereinrichtung durch eine Ausgangszelle der Teilnehmereinrichtung umfasst.

3. Verfahren nach Anspruch 1 oder 2, ferner umfassend: Erfassen des TAC der Zelle, zu der die Teilnehmereinrichtung aktuell Zugang hat, durch die MME aus einer S1-Nachricht.

4. Verfahren nach Anspruch 1 oder 2, ferner umfassend: nach erfolgreicher Herstellung einer S1-Verbindung Speichern, durch die MME, eines von jedem eNB unterstützten Tracking-Bereichs und Pflegen einer Adjazenzbeziehung zwischen verschiedenen Tracking-Bereichen gemäß S1-Verbindungsinformationen.

5. Verfahren zum Auswählen eines öffentlichen terrestrischen Mobilfunknetzes (PLMN) als Übergabeziel, umfassend:
nach Empfangen einer Liste äquivalenter öffentlicher terrestrischer Mobilfunknetze (Equivalent Public Land Mobile Network - EPLMN), die von einer Mobilitätsmanagement-Netzwerkkomponente (Mobility Management Entity - MME) ausgegeben wird, durch einen entwickelten Knoten B (Evolved Node B -eNB) einer Teilnehmereinrichtung unter Verwendung des Verfahrens nach einem der Ansprüche 1 bis 4 Verwenden eines aus einem Schnitt zwischen einer von einem Übergabezielzellenkandiaten der Teilnehmereinrichtung unterstützten PLMN-Liste und der EPLMN-Liste als das Übergabeziel-PLMN.

6. Mobilitätsmanagement-Netzwerkkomponente (Mobility Management Entity - MME), die eine Listengenerierungseinheit und eine Listenausgabeeinheit umfasst, **dadurch gekennzeichnet, dass**:
die Listengenerierungseinheit konfiguriert ist zum: bei Auslösung Gruppieren eines Tracking-Bereichscodes (Tracking Area Code - TAC) einer Zelle, zu der eine Teilnehmereinrichtung aktuell Zugang hat, und eines adjazenten TAC des TAC der Zelle, zu der die Teilnehmereinrichtung aktuell Zugang hat, zu einer TAC-Menge; Finden jedes entwickelten Knotens B (Evolved Node B - eNB), der wenigstens einen TAC in der TAC-Menge unterstützt, Auswählen von primären öffentlichen terrestrischen Mobilfunknetzen (Primary Public Land Mobile Networks - PLMN) unter den TAC in der TAC-Menge, die vom eNB unterstützt werden, und Gruppieren verschiedener TAC und ihrer entsprechenden primären PLMN zu einer zweiten Menge, wobei die zweite Menge keine identischen Elemente hat und kein Versorgungs-PLMN einer aktuellen Versorgungszelle der Teilnehmereinrichtung umfasst; und Hinzufügen von PLMN in der zweiten Menge, die voneinander verschieden sind, zu einer Liste äquivalenter öffentlicher terrestrischer Mobilfunknetze (Equivalent Public Land Mobile Network - EPLMN); und
die Listenausgabeeinheit zum Ausgeben der EPLMN-Liste an den eNB der Teilnehmereinrichtung konfiguriert ist.

7. MME nach Anspruch 6, wobei die Listengenerierungseinheit auf die folgende Weise ausgelöst wird: Initiieren eines Zugangs durch die Teilnehmereinrichtung oder Durchführen einer Tracking-Bereichsaktualisierung durch die Teilnehmereinrichtung oder Initiieren einer S1-Übergabeanforderung für die Teilnehmereinrichtung durch eine Ausgangszelle.

8. MME nach Anspruch 6 oder 7, wobei die Listengenerierungseinheit ferner zum Erfassen des TAC der Zelle, zu der die Teilnehmereinrichtung aktuell Zugang hat, aus der S1-Nachricht konfiguriert ist.

9. MME nach Anspruch 6 oder 7, wobei die MME ferner umfasst:
eine Informationspflegeeinheit, konfiguriert zum: nach erfolgreicher Herstellung der S1-Verbindung Speichern eines von jedem eNB unterstützten Tracking-Bereichs und Pflegen einer Adjazenzbeziehung zwischen verschiedenen Tracking-Bereichen gemäß S1-Verbindungsinformationen.

10. Entwickelter Knoten B (Evolved Node B - eNB), umfassend eine Listenempfangseinheit und eine Übergabezielauswahleinheit, **dadurch gekennzeichnet, dass**:
die Listenempfangseinheit zum Empfangen einer Liste äquivalenter öffentlicher terrestrischer Mobilfunknetze (Equivalent Public Land Mobile Network - EPLMN), die von einer Mobilitätsmanagement-Netzwerkkomponente (Mobility Management Entity - MME) ausgegeben wird, unter Verwenden des Verfahrens nach einem der Ansprüche 1 bis 4 konfiguriert ist und
die Übergabezielauswahleinheit zum Verwenden eines öffentlichen terrestrischen Mobilfunknetzes (Public Land Mobile Network - PLMN), das aus einem Schnitt zwischen einer Liste öffentlicher terrestrischer Mobilfunknetze (Public Land Mobile Network - EPLMN), die von einem Übergabezielzellenkandidaten der Teilnehmereinrichtung unterstützt wird, und der EPLMN-Liste erhalten wird, als das Übergabe-PLMN konfiguriert ist.

## Revendications

1. Procédé effectué par une MME (Mobility Management Entity - entité de gestion de la mobilité) à des fins de configuration d'une liste de EPLMN (Equivalent Public Land Mobile Network - réseaux mobiles terrestres publics équivalents), **caractérisé par** ce qu'il comporte les étapes consistant à :
dès le déclenchement, regrouper (203) un TAC (Tracking Area Code - code de zone de suivi) d'une cellule en cours d'accès par un équipement d'utilisateur et un TAC adjacent par rapport au TAC de la cellule en cours d'accès par l'équipement d'utilisateur pour former un ensemble de TAC ;
trouver (204) chaque eNB (Evolved Node B - noeud B évolué) qui prend en charge au moins un TAC dans l'ensemble de TAC, sélectionner(301) des PLMN (Public Land Mobile Networks - réseaux mobiles terrestres publics) primaires sous les TAC dans l'ensemble de TAC qui sont pris en charge par le eNB, et regrouper différents TAC et leurs PLMN primaires correspondants pour former un deuxième ensemble, dans lequel, le deuxième ensemble n'a (302) pas d'éléments identiques, et ne comporte pas (303) un PLMN de desserte d'une cellule de desserte en cours de l'équipement d'utilisateur ; et
ajouter (204) des PLMN dans le deuxième ensemble qui sont (304) différents les uns des autres à une liste de EPLMN (Equivalent Public Land Mobile Network - réseaux mobiles terrestres publics équivalents) et émettre la liste de EPLMN au eNB de l'équipement d'utilisateur.

2. Procédé selon la revendication 1, dans lequel, l'étape comme quoi la MME est déclenchée comporte l'étape comme quoi l'équipement d'utilisateur initialise un accès, ou l'équipement d'utilisateur effectue une mise à jour de la zone de suivi, ou une cellule de source de l'équipement d'utilisateur initialise une demande de transfert intercellulaire S1 pour l'équipement d'utilisateur.

3. Procédé selon la revendication 1 ou la revendication 2, comportant par ailleurs : l'étape comme quoi la MME acquiert le TAC de la cellule en cours d'accès par l'équipement d'utilisateur en provenance d'un message S1.

4. Procédé selon la revendication 1 ou la revendication 2, comportant par ailleurs : une fois qu'une connexion S1 est établie avec succès, l'étape comme quoi la MME stocke une zone de suivi prise en charge par chaque eNB, et maintient une relation de contiguïté entre différentes zones de suivi en fonction des informations de connexion S1.

5. Procédé permettant de sélectionner un PLNM (Public Land Mobile Network - réseau mobile terrestre public) cible à des fins de transfert intercellulaire, comportant :
après l'étape comme quoi un eNB (Evolved Node B - noeud B évolué) d'un équipement d'utilisateur reçoit une liste de EPLMN (Equivalent Public Land Mobile Network - réseaux mobiles terrestres publics équivalents) émise par une MME (Mobility Management Entity - entité de gestion de la mobilité) en utilisant le procédé selon l'une quelconque des revendications 1 à 4, l'étape consistant à utiliser un PLMN obtenu à partir d'une intersection entre une liste de PLMN prise en charge par une cellule candidate cible à des fins de transfert intercellulaire de l'équipement d'utilisateur et la liste de EPLMN comme étant le PLMN cible à des fins de transfert intercellulaire.

6. MME (Mobility Management Entity - entité de gestion de la mobilité), comportant une unité de génération de listes et une unité d'émission de listes, **caractérisée en ce que** :
l'unité de génération de listes est configurée pour : dès le déclenchement, regrouper un TAC (Tracking Area Code - code de zone de suivi) d'une cellule en cours d'accès par un équipement d'utilisateur et un TAC adjacent par rapport au TAC de la cellule en cours d'accès par l'équipement d'utilisateur pour former un ensemble de TAC ; trouver chaque eNB (Evolved Node B - noeud B évolué) qui prend en charge au moins un TAC dans l'ensemble de TAC, sélectionner des PLMN (Public Land Mobile Networks - réseaux mobiles terrestres publics) primaires sous les TAC dans l'ensemble de TAC qui sont pris en charge par le eNB, et regrouper différents TAC et leurs PLMN primaires correspondants pour former un deuxième ensemble, dans laquelle, le deuxième ensemble n'a pas d'éléments identiques, et ne comporte pas un PLMN de desserte d'une cellule de desserte en cours de l'équipement d'utilisateur ; et ajouter des PLMN dans le deuxième ensemble qui sont différents les uns des autres à une liste de EPLMN (Equivalent Public Land Mobile Network - réseaux mobiles terrestres publics équivalents) ; et
l'unité d'émission de listes est configurée pour émettre la liste de EPLMN au eNB de l'équipement d'utilisateur.

7. MME selon la revendication 6, dans laquelle, l'unité de génération de listes est déclenchée de la façon suivante : l'équipement d'utilisateur initialise un accès, ou l'équipement d'utilisateur effectue une mise à jour de la zone de suivi, ou une cellule de source de l'équipement d'utilisateur initialise une demande de transfert intercellulaire S1 pour l'équipement d'utilisateur.

8. MME selon la revendication 6 ou la revendication 7, dans laquelle, l'unité de génération de listes est par ailleurs configurée pour acquérir le TAC de la cellule en cours d'accès par l'équipement d'utilisateur en provenance du message S1.

9. MME selon la revendication 6 ou la revendication 7, dans laquelle, la MME comporte par ailleurs :
une unité de conservation d'informations, configurée pour : une fois que la connexion S1 est établie avec succès, stocker une zone de suivi prise en charge par chaque eNB, et maintenir une relation de contiguïté entre différentes zones de suivi en fonction des informations de connexion S1.

10. eNB (Evolved Node B - noeud B évolué), comportant une unité de réception de listes et une unité de sélection de cible à des fins de transfert intercellulaire, **caractérisé en ce que** :
l'unité de réception de listes est configurée pour recevoir une liste de EPLMN (Equivalent Public Land Mobile Network - réseaux mobiles terrestres publics équivalents) émise par une MME (Mobility Management Entity - entité de gestion de la mobilité) en utilisant le procédé selon l'une quelconque des revendications 1 à 4 ; et
l'unité de sélection de cible à des fins de transfert intercellulaire est configurée pour utiliser un PLNM (Public Land Mobile Network - réseau mobile terrestre public) obtenu à partir d'une intersection entre une liste de PLNM (Public Land Mobile Network - réseau mobile terrestre public) prise en charge par une cellule candidate cible à des fins de transfert intercellulaire de l'équipement d'utilisateur et la liste de EPLMN comme étant le PLMN cible à des fins de transfert intercellulaire.
